# EUROPEAN PATENT APPLICATION

(11) **EP 1 932 780 A1**
(43) Date of publication of application: **18.06.2008**
(21) Application number: 05790358.5
(22) Date of filing: 04.10.2005
(51) Int. Cl.: B65G 1/137

(54) **ARTICLE MANAGEMENT SYSTEM AND ARTICLE MANAGEMENT METHOD**

(71) Applicant: Fujitsu Ltd., Kawasaki-shi, Kanagawa 211-8588 (JP)
(72) Inventor: NAGAI, Kouichi, Kawasaki-shi, Kanagawa 211-8588 (JP); NAKAMURA, Kou, Kawasaki-shi, Kanagawa 211-8588 (JP)
(74) Representative: Fenlon, Christine Lesley
(86) International application number: PCT/JP2005/018374
(87) International publication number: WO 2007/043139

(57) **Abstract**

An item management system includes an IC tag, a plurality of IC readers operable to electronically detect the IC tag, and a monitor and control unit configured to detect successive positions of the IC tag by use of the plurality of IC readers in response to movement of the IC tag, to make a determination as to whether a travel route indicated by the detected successive positions is a normal route, and to activate alarm when the determination indicates an abnormal route.

## Description

### Technical Field

The present invention generally relates to goods/item management systems and goods/item management methods, and particularly relates to a goods/item management system and goods/item management method that manage goods/items based on an IC tag attacked thereto.

### Background Art

For the purpose of managing the numbers of goods and the like and detecting the loss and theft of goods, a general approach is to create a list of goods to be managed and to manage the goods by constantly matching these goods against the list. These days a system utilizing IC tags is used for the purpose of preventing theft. In shops or the like, each goods item is attached with an IC tag, and a wireless tag detector is installed at the entrance/exit, which serves to detect the taking of unpaid goods.

An IC tag is a device that is provided with an IC chip serving as a record medium for recording necessary information. An IC tag functions as a tag (label) from which the recorded information can be read through wireless means.

The IC tag includes an active type that operates based on an embedded battery serving as a power source and a passive type that operates without a battery by using as a power source a magnetic field and/or electrical field supplied from outside. A passive-type device is not suited for long-distance communication, but can be implemented as a small and inexpensive device due to no need of a battery.

Patent Document 1 discloses an example of a goods management system utilizing IC tags. This goods management system manages information contained in each IC tag attached to goods. When the signal from an IC tag is lost, alarm is immediately activated if the goods item is of high importance. If the goods item is not of high importance, alarm is activated after the lapse of a predetermined time period during which the undetected state continues. Further, information indicative of whether the goods are allowed to be moved may be recorded in advance. When movement is detected with respect to a goods item that is not allowed to be moved, or when communication is disconnected, alarm is activated.

Patent Document 2 discloses a non-IC-tag-based system for managing electronic equipments capable of communication. This management system monitors all the electronic equipments that constitute an equipment group. After the passage of a predetermined time period following the disconnection of communication, all the electronic equipments are placed in a state in which they are not allowed to be used. This results in user input into each equipment being prevented or not allowed. Further, the main system can react by activating a program for disconnected communication, for example.

Patent Document 3 discloses a position management system utilizing IC tags, which is an application to a logistic system. This position management system stores route information in a tag in advance where the route information indicates individual points existing along a travel route arranged in the sequence. When the position of the tag is deviated from this route, information indicative of a correct route is displayed. Namely, a travel route is recorded in an IC tag in advance, and a correct route is displayed upon deviation from the recorded route.

It is expected that the use of a goods management system utilizing IC tags helps to manage the numbers of goods/items and the like in companies and the like and serves to detect and prevent the loss and theft of goods and items. In such a case, if goods and items to be managed are movable (i.e., allowed to be moved), sufficient management cannot be exercised if only the position of the goods and items are monitored. For example, goods and items that are allowed to be moved within the premises of a company may be moved without authorization from one place to another within the premises. In such a case, the monitoring of the position of goods and items does not serve to detect and prevent the loss and theft of these goods and items.

Goods and items that are used in a company may be given respective, different usage restrictions. For example, some items may not be allowed to be taken out of the company while other items may be allowed to be taken out of the company. The items that are not allowed to be taken out of the company may include those which can be freely moved within a predetermined area section but are not allowed to be taken out of this area section even if they stay within the company. Even when a given item is allowed to be taken out of the company, it would be trouble if the item is taken off of the list of managed items and stolen.

In order for a goods/item management system utilizing IC tags to manage the numbers of goods/items and the like and to detect and prevent the loss and theft of goods and items, diligent control responsive to the usage restriction varying from item to item is necessary.
[Patent Document 1] Japanese Patent Application Publication No. 2002-163301
[Patent Document 2] Japanese Patent Application Publication No. 2003-289307
[Patent Document 3] Japanese Patent Application Publication No. 2004-302970

### Disclosure of Invention

### Problem to be Solved by the Invention

Accordingly, it is the object of the present invention to provide a goods/item management system and goods/item management method that can detect and prevent the loss and theft of movable goods/items. Further, it is another object to provide a goods/item management system and goods/item management method that can perform diligent item control responsive to the usage restriction of each item.

### Means to Solve the Problem

An item management system according to the present invention includes an IC tag, a plurality of IC readers operable to electronically detect the IC tag, and a monitor and control unit configured to detect successive positions of the IC tag by use of the plurality of IC readers in response to movement of the IC tag, to make a determination as to whether a travel route indicated by the detected successive positions is a normal route, and to activate alarm when the determination indicates an abnormal route.

According to an aspect of the present invention, the item management system described above further includes an information storage unit configured to store movement level information indicative of a movement allowed area that is selected for assignment to the IC tag from a plurality of movement allowed areas, wherein the monitor and control unit refers to the movement level information stored in the information storage unit, and activates alarm upon detecting that the detected successive positions fall outside the selected movement allowed area indicated by the movement level information.

An item management method according to the present invention includes the steps of detecting successive positions of an IC tag by a plurality of IC readers in response to movement of the IC tag, making a determination as to whether a travel route indicated by the detected successive positions is a normal route, and activating alarm when the determination indicates an abnormal route.

### Advantage of the Invention

According to at least one embodiment of the present invention, the goods/item management system manages each item in accordance with the movement level (i.e., an area in which movement is allowed) of an item to which an IC tag is attached, and determines whether to activate alarm when the item is moved. In so doing, the monitor and control unit activates alarm upon detection at the position where such detection is regarded as abnormal. Also, the monitor and control unit activates alarm upon detecting movement along an abnormal route even if the position of detection itself is normal. Activation of alarm upon detecting the movement of an IC tag along a route different from a normal route makes it possible to perform diligent item management.

### Brief Description of Drawings

Fig. 1 is a block diagram showing an example of the configuration of an IC tag.
Fig. 2 is a block diagram showing an example of the configuration of a reader/writer that supplies electric power to and performs radio communication with the IC tag.
Fig. 3 is a drawing showing a schematic configuration of an embodiment of a data management system according to the present invention.
Fig. 4 is a drawing showing a specific example of information stored in an information storage unit and information stored in the IC tag.
Fig. 5 is a drawing for explaining an item management operation performed by the goods/item management system according to the present invention.
Fig. 6 is a flowchart showing the item management operation performed by the goods/item management system according to the present invention.
Fig. 7 is a drawing for explaining processing for checking whether a route is normal.
Fig. 8 is a flowchart showing the inventory management operation performed by the goods/item management system according to the present invention.
Fig. 9 is a drawing showing an example of the hardware configuration of a host computer.

### Description of Reference Numbers

- 10: IC tag
- 20: Reader/Writer
- 30: Host Computer
- 31: Monitor and Control Unit
- 32: Information Storage Unit
- 33: Information Input Unit
- 34: Information Transmission Unit

### Best Mode for Carrying Out the Invention

In the following, embodiments of the present invention will be described with reference to the accompanying drawings.

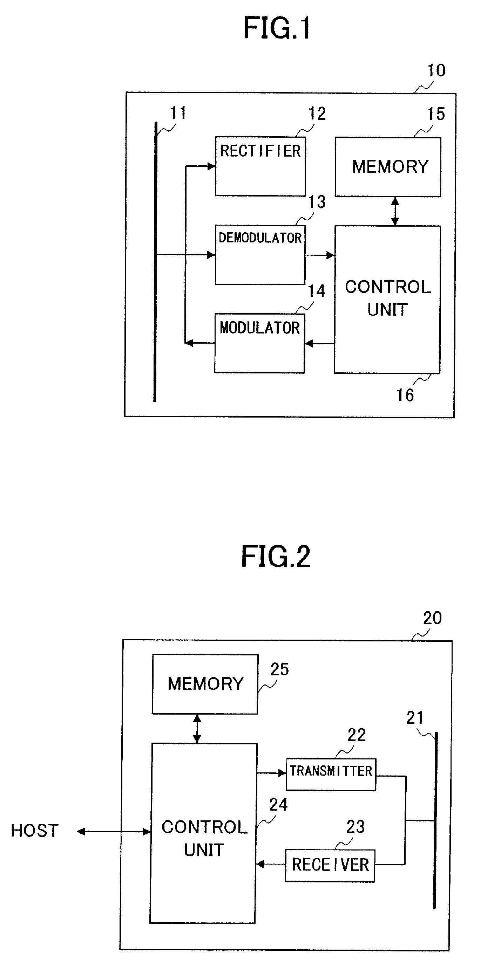

A description will first be given of the structure and operation of an IC tag used in the embodiments of the present invention. Fig. 1 is a block diagram showing an example of the configuration of an IC tag.

An IC tag 10 shown in Fig. 1 includes an antenna 11, a rectifier 12, a demodulator 13, a modulator 14, a memory 15, and a control unit 16. The antenna 11 is provided for the purpose of performing noncontact power/signal reception through wireless means. The memory 15 stores various types of information relating to the usage of the IC tag 10. The control unit 16 performs various types of processing relating to the usage of the IC tag 10.

Signals received by the antenna 11 are supplied to the rectifier 12 and the demodulator 13. Namely, the radio waves received by the antenna 11 not only include a radio wave for supplying power through the rectifier 12, but also include an AM modulated signal for carrying information for communication purposes, a clock signal, etc. The electric power received by the antenna 11 is boosted through resonance by the inductance L of the antenna and a condenser (not shown) connected in parallel to the inductance L. The boosted electric power is supplied as an alternating voltage to the rectifier 12.

The rectifier 12 converts the alternating voltage supplied from the antenna 11 into a direct-current voltage. The rectifier 12 includes a regulator and the like for supplying a constant direct-current voltage to the load. The rectifier 12 supplies a constant direct-current voltage to the demodulator 13, the modulator 14, the memory 15, and the control unit 16.

The demodulator 13 demodulates the signal received by the antenna 11, and supplies the demodulated signal to the control unit 16. The modulator 14 modulates a signal supplied from the control unit 16, and performs radio transmission through the antenna 11.

Fig. 2 is a block diagram showing an example of the configuration of a reader/writer (i.e., IC reader) that supplies electric power to and performs radio communication with the IC tag 10 shown in Fig. 10. An reader/writer (IC reader) 20 shown in Fig. 2 includes an antenna 21, a transmitter 22, a receiver 23, a control unit 24, and a memory 25.

The reader/writer 20 transmits radio waves from the transmitter 22 through the antenna 21. The IC tag 10 receives the radio waves from the reader/writer 20 through the antenna 11. As previously described, an electromotive force is generated through resonance by inductance and capacitance, so that the rectifier 12 of the IC tag 10 generates a direct-current voltage. Based on this direct-current voltage, the circuit (IC chip) incorporated into the IC tag 10 is activated. The control unit 16 reads necessary information from the memory 15, and transmits the retrieved information from the modulator 14 through the antenna 11. The receiver 23 of the reader/writer 20 receives a signal from the IC tag 10 through the antenna 21, and supplies the received signal to the control unit 24. The control unit 24 performs data transfer to send information contained in the received signal to an external device (i.e., a host apparatus or the like) according to need.

Further, the control unit 24 receives data from an external apparatus (i.e., a host apparatus or the like), and transmits the data through radio from the transmitter 22 and the antenna 21. The IC tag 10 receives at the antenna 11 the radio signal transmitted from the reader/writer 20, and supplies the received data to the control unit 16 through the demodulator 13. The control unit 16 stores the received data in the memory 15 according to need.

In this manner, the reader/writer 20 and the IC tag 10 can perform two-way data transmission with each other. The memory 25 of the reader/writer 20 serves as a memory device for temporarily storing data that is transferred.

In the data management system according to the present invention, the IC tag 10 and the reader/writer 20 as described above are used to manage each goods/item. In the following, the detail of the data management system according to the present invention will be described.

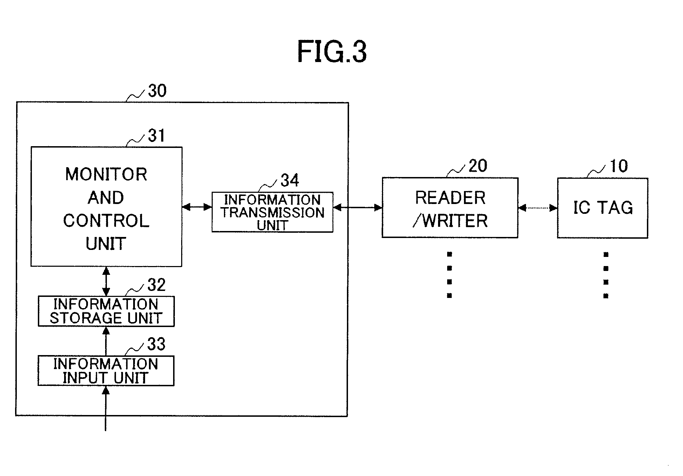

Fig. 3 is a drawing showing a schematic configuration of an embodiment of a data management system according to the present invention. The data management system shown in Fig. 3 includes the IC tag 10, the reader/writer 20, and a host computer 30. For the sake of convenience of illustration, only one IC tag 10 and one reader/writer 20 are illustrated. In practice, however, a plurality of IC tags 10 and a plurality of reader/writers 20 are provided, so that the host computer 30 manages a plurality of items (i.e., the plurality of IC tags 10) at a plurality of locations (i.e., the plurality of reader/writers 20). In general, communication between the IC tag 10 and the reader/writer 20 is wireless, and communication between the reader/writer 20 and the host computer 30 may be wired.

The host computer 30 includes a monitor and control unit 31, an information storage unit 32, an information input unit 33, and an information transmission unit 34. The information storage unit 32 stores therein information (i.e., an IC tag list, which will later be described) that is managed for each IC tag 10 for the purpose of managing items. The information input unit 33 is used to input this information into the information storage unit 32 from outside the host computer 30. The information transmission unit 34 transmits (sends) information stored in the information storage unit 32 to the reader/writer 20, and receives data from the reader/writer 20. The monitor and control unit 31 performs the reading, writing, and updating of information with respect to the information storage unit 32. The monitor and control unit 31 also performs data communication with the reader/writer 20 through the information transmission unit 34 to monitor the IC tags 10 to manage items.

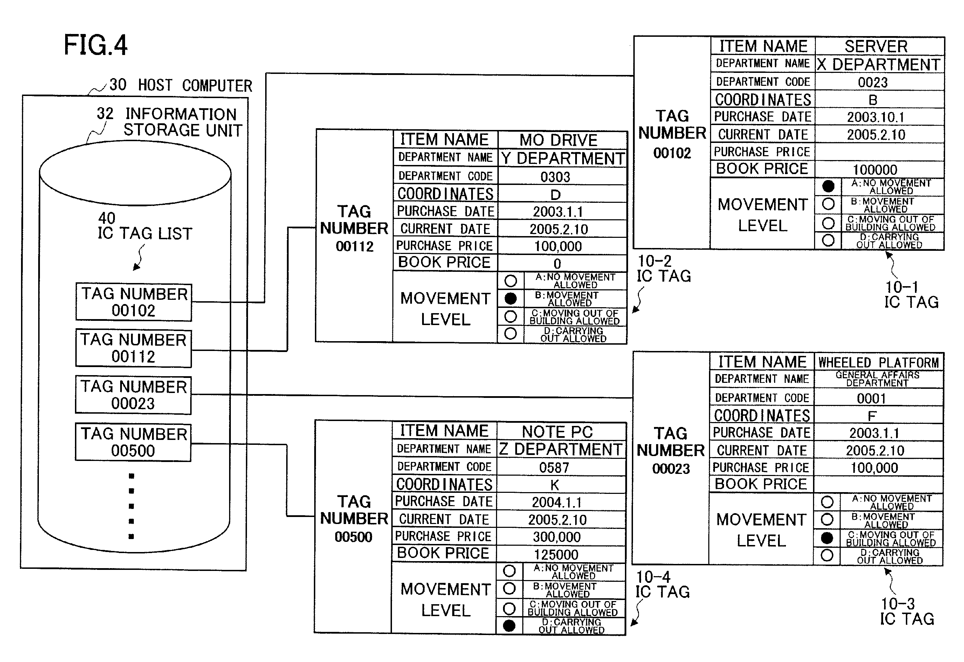

Fig. 4 is a drawing showing a specific example of information stored in the information storage unit 32 and information stored in the IC tag 10. In the data management system according to the present invention, the host computer 30 manages IC tags 10-1 through 10-4 attached to respective goods/items. Each of the IC tags 10-1 through 10-4 has the same configuration as the IC tag 10 shown in Fig. 1. Although not shown in Fig. 3, the reader/writer 20 shown in Fig. 2 performs data transfer between the IC tags 10-1 through 10-4 and the host computer 30.

The host computer 30 is provided with the information storage unit 32 such as a hard-disc drive, which stores an IC tag list 40. The IC tag list 40 stores the same information as stored in the IC tags 10-1 through 10-4. The data entries of the stored information include an item/goods name, a department name, a department code, coordinates, a purchase date, a current date, a purchase price, a book price, a movement level, etc.

An IC tag 10-1, for example, is given a tag number 00102, and has the item name "SERVER", the department name "X DEVELOPMENT SECTION", the department code "0023", the coordinates "B", the purchase date "10/1/2003", the current date "2/10/2005", the purchase price "520,000 YEN", the book price "100000 YEN", and the movement level "A" indicating the prohibition of any movement. Such data contents are stored in the memory 15 (see Fig. 1) of the IC tag 10-1 attached to the item, and is also stored in the information storage unit 32 as one entry of the IC tag list 40.

The coordinates "B" shown in the above-noted example indicate that the reader/writer 20 that has communicated with the IC tag 10-1 most recently (i.e., the reader/writer 20 that has read the contents of the IC tag 10-1) is located at the position "B". In the goods/item management system of the present invention, a plurality of reader/writers 20 are provided at respective positions. When an IC tag 10 passes by a given reader/writer 20, the reader/writer 20 reads the data contents of this IC tag 10. In the above-noted example, the position (i.e., an area number) at which the reader/writer 20 having read the data contents of the IC tag 10-1 last time is installed is "B".

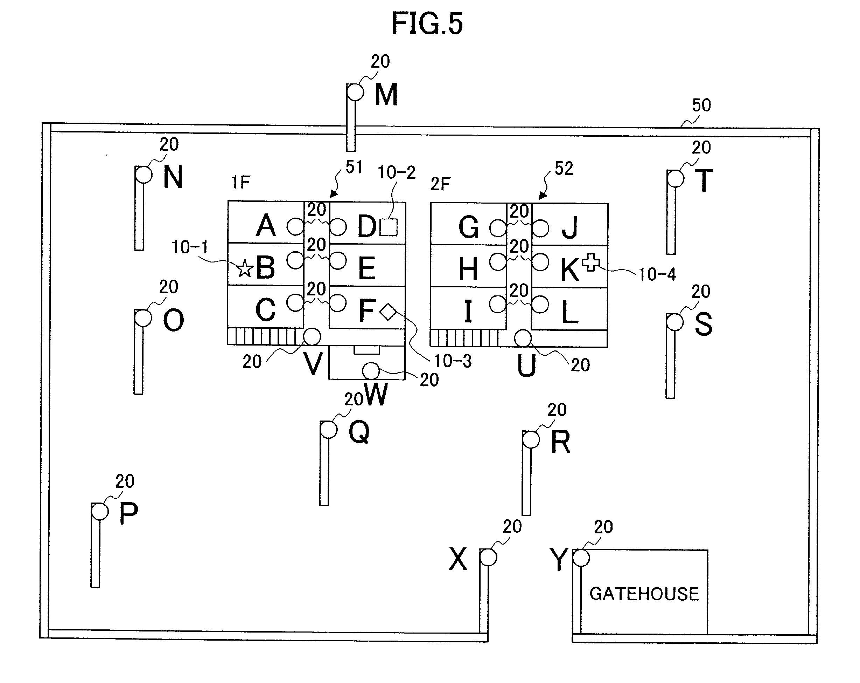

Fig. 5 is a drawing for explaining an item management operation performed by the goods/item management system according to the present invention. Fig. 5 shows premises 50 of a company, for example. The company premises 50 include a building, which is comprised of a first floor 51 and a second floor 52. In the company premises 50, a plurality of reader/writers 20 are installed inside the building as well as outside the building. In Fig. 5, each reader/writer 20 is associated with alphabet letters A through Y for identifying their respective positions (i.e., coordinates). The positions A through F correspond to six rooms provided on the first floor 51, and the positions G through L correspond to six rooms provided on the second floor 52. The reader/writer 20 in each room may be installed near the entrance/exit of the room, for example.

The position V corresponds to a foyer at the bottom of the stairs on the first floor 51. The position U corresponds to a foyer at the top of the stairs on the second floor 52. The position W corresponds to the entrance/exit of the first floor 51. The positions X and Y correspond to the entrance/exit gate of the company premises 50.

The item to which the IC tag 10-1 is attached is placed in the room corresponding to the position B. By the same token, items to which the IC tags 10-2, 10-3, and 20-4 are attached are placed in the rooms corresponding to the positions D, F, and K, respectively. The IC tags 10-1 through 10-4 have the data contents shown in Fig. 4 stored therein.

The item of the IC tag 10-2 positioned in the room corresponding to the position D (hereinafter referred to as a "room D") is detected by the reader/writer 20 of the room D when it is brought into the room D. Upon leaning that the reader/writer 20 of the room D has just detected the IC tag 10-2, the host computer 30 rewrites the position information of the IC tag 10-2 to the position D in the IC tag list 40 stored in the information storage unit 32. Further, the host computer 30 sends an instruction to the IC tag 10-2 through the reader/writer 20 so as to rewrite the position information to the position D in the memory 15 of the IC tag 10-2. Such exchange of signals and rewriting (updating) of data contents with respect to the IC tag 10, the reader/writer 20, and the host computer 30 are performed only when the item associated with the IC tag 10 is moved. No continuous exchange of signals is performed for the purpose of coordinates control. Accordingly, excessively high-performance hardware in terms of the permissible number of rewrite operations of the memory 15 of the IC tag 10 and the communication distance between the IC tag 10 and the reader/writer 20 is not necessary

As shown in Fig. 4, the IC tag 10-1 having the tag number "00102" placed in the room B is associated with an item that is set to the movement level A (i.e., no movement allowed). Accordingly, when the item associated with the IC tag 10-1 is moved out of the room B, the host computer 30 needs to detect this event as an abnormal event. When the IC tag 10-1 is detected by a reader/writer 20 that is different from the reader/writer 20 of the room B, therefore, the host computer 30 detects this event as an abnormal event, and activates alarm.

The IC tag 10-2 having the tag number "00112" placed in the room D is associated with an item that is set to the movement level B (i.e., movement allowed). In this example, "movement allowed" means that moving the item within the building is allowed, but moving the item out of the building is not allowed. Accordingly, when any reader/writer 20 installed on the first floor 51 or on the second floor 52 detects the IC tag 10-2, the host computer 30 only updates the position information contained in the IC tag list 40 and in the memory 15 of the IC tag 10-2. No alarm is activated in this case. When any reader/writer 20 situated outside the building detects the IC tag 10-2, on the other hand, the host computer 30 activates alarm. In the absence of detection by a reader/writer 20 situated outside the building, the IC tag 10-2 having the registered current position D may suddenly be detected by the reader/writer 20 at the position J without detection by any of the reader/writers 20 at positions V and U. In such a case, provision may be made such that the host computer 30 detects this event as an abnormal event to activate alarm. This event corresponds to a case in which the item associated with the IC tag 10-2 is carried through the window of the room D, for example, for delivery to the room J.

The IC tag 10-3 having the tag number "00023" placed in the room F is associated with an item that is set to the movement level C (i.e., moving out of the building allowed). In this example, "movement out of the building allowed" means that moving the item out of the building as well as within the building is allowed. Accordingly, when any reader/writer 20 installed in the company premises 50 detects the IC tag 10-3, the host computer 30 only updates the position information contained in the IC tag list 40 and in the memory 15 of the IC tag 10-3. No alarm is activated as a general rule. Provision may be made, however, such that alarm is activated when a reader/writer 20 detects the IC tag 10-3 at the position M near the wall of the premises or at the position X or Y corresponding to the entrance/exit of the premises. Further, the IC tag 10-3 having the registered current position F may suddenly be detected by the reader/writer 20 at the position R without detection by the reader/writer 20 at position W. In such a case, provision may be made such that the host computer 30 detects this event as an abnormal event to activate alarm. This event corresponds to a case in which the item associated with the IC tag 10-3 is carried through the window of the room F, for example, for transportation to the entrance/exit of the company premises 50.

The IC tag 10-3 having the tag number "00500" placed in the room K is associated with an item that is set to the movement level D (i.e., carrying out allowed). In this example, "carrying out allowed" means that the free movement of the item is allowed regardless of whether its position is inside the building, outside the building, inside the premises, or outside the premises. Accordingly, when a reader/writer 20 detects the IC tag 10-3, the host computer 30 only updates the position information contained in the IC tag list 40 and in the memory 15 of the IC tag 10-4. No alarm is activated as a general rule. However, the IC tag 10-4 having the registered current position K may suddenly be detected by the reader/writer 20 at the position S, R, or the like without detection by the reader/writer 20 at position U, V, W, or the like. In such a case, provision may be made such that the host computer 30 detects this event as an abnormal event to activate alarm. This event corresponds to a case in which the item associated with the IC tag 10-4 is carried through the window of the room K, for example, for transportation to the entrance/exit of the company premises 50. Further, the IC tag 10-4 having the registered current position K may be detected by the reader/writer 20 at the position B without detection by the reader/writer 20 at the position V or U. In such a case, provision may be made such that the host computer 30 detects this event as an abnormal event to activate alarm.

In this manner, the goods/item management system according to the present invention manages each item in accordance with the movement level (i.e., an area in which movement is allowed) of an item to which an IC tag 10 is attached, and determines whether to activate alarm when the item is moved. In so doing, the host computer 30 activates alarm upon detection of an IC tag 10 at the position where such detection is regarded as abnormal. Also, the host computer 30 activates alarm upon detecting the movement of the IC tag 10 along an abnormal route even if the position of detection itself is normal. Activation of alarm upon detecting the movement of an IC tag 10 along a route different from a normal route makes it possible to perform diligent item management.

Provision may be made such that the movement levels of items are changed by accessing the host computer 30. In such a case, a user may preferably be identified by use of a personal identification number of the like, so that only a person having authorization to change the movement level of an item can modify the movement level of the item.

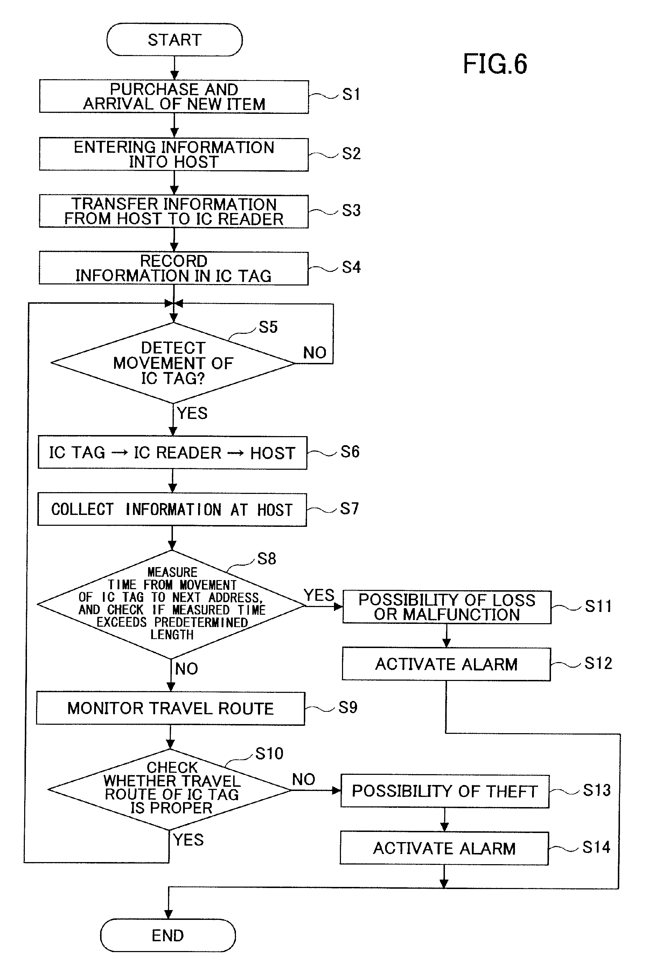

Fig. 6 is a flowchart showing the item management operation performed by the goods/item management system according to the present invention. In step S5, a new item is delivered or purchased.

In step S2, information about the new item is entered into the host computer 30. Specifically, data of each entry as shown in Fig. 4 regarding the new item are input through the information input unit 33 such as a keyboard and mouse or the like, so that the data of each entry is stored in the information storage unit 32 as part of the IC tag list 40.

In step S3, information stored in step S2 is transferred from the host computer 30 to the reader/writer (IC reader) 20. Specifically, the monitor and control unit 31 retrieves from the information storage unit 32 the data of the new item that is part of the IC tag list 40, and transmits the retrieved data to the reader/writer 20 through the information transmission unit 34. The control unit 24 of the reader/writer 20 stores in the memory 25 the data of the new item received from the host computer 30.

In step S4, information about the new item is recorded in the IC tag 10. Specifically, the control unit 24 of the reader/writer 20 transmits the data of the new item stored in the memory 25 to the IC tag 10 through the transmitter 22. The control unit 16 of the IC tag 10 stores in the memory 15 the data of the new item received from the reader/writer 20.

In step S5, a check is made as to whether the IC tag 10 is moved. When the IC tag 10 is moved, the IC tag 10 is detected based on radio waves transmitted from a reader/writer 20 situated along its travel route.

In step S6, information regarding the detected IC tag 10 is transmitted to the host computer 30 through the reader/writer 20. This information may at least include information (i.e., tag number or the like) identifying the IC tag 10.

In step S8, the host computer 30 collects information. Specifically, the monitor and control unit 31 of the host computer 30 determines which reader/writer 20 has just detected which IC tag 10 based on the information regarding the IC tag 10 transmitted from the reader/writer 20. Further, the monitor and control unit 31 updates the IC tag list 40 of the information storage unit 32 based on the received information. Data contents that are to be written through updating include a new address of the detected IC tag 10 (i.e., the position of the detecting reader/writer 20), the time at which the IC tag 10 is detected, etc.

In step S8, a check is made as to whether more than a predetermined time period has passed based on the recorded time of movement of the IC tag 10. If more than a predetermined time period (e.g., five minutes) has passed, a determination is made in step S11 that theft or malfunction has occurred, followed by activating alarm in step S12. This situation corresponds to a case in which, in Fig. 5, for example, the IC tag 10-4 is detected at the positions K and U, but is not detected by the reader/writers 20 at the positions V, I, L, and the like for more than five minutes. A check as to whether a predetermined time period has passed is made by the monitor and control unit 31 of the host computer 30. The procedure proceeds to step S9 if no problem is detected with respect to the time lapse.

In step S9, the travel route is monitored. Specifically, the monitor and control unit 31 of the host computer 30 records the positions at which the IC tag 10 is successively detected as it moves. The recorded positions constitute a position history stored in the information storage unit 32.

In step S10, a check is made as to whether the travel route of the IC tag 10 is normal. Specifically, the monitor and control unit 31 of the host computer 30 checks whether the travel route is normal, with respect to the IC tag 10 for which movement has just been detected, based on the past position history and the latest detected position. In order to detect whether the route is normal, a list of segments constituting all the normal routes may be entered in advance into the information storage unit 32 of the host computer 30 through the information input unit 33.

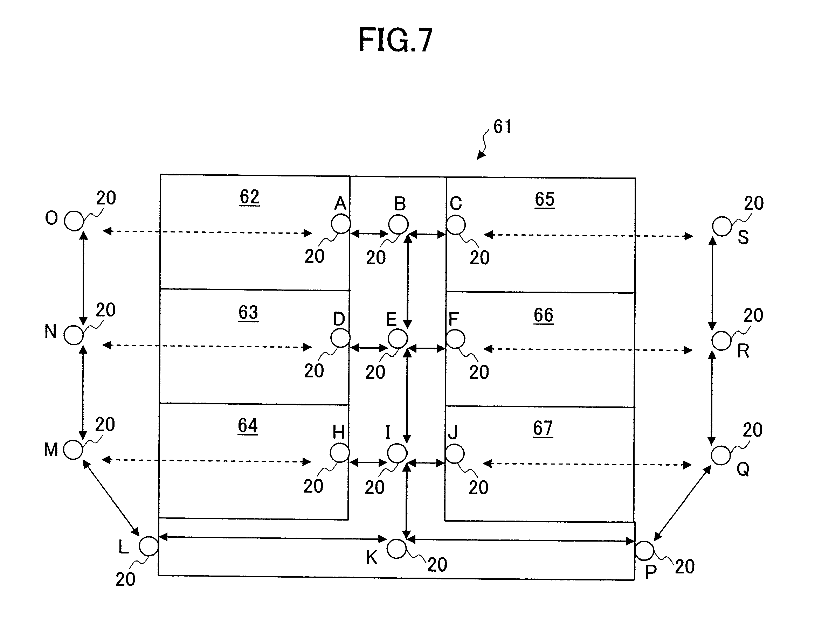

Fig. 7 is a drawing for explaining processing for checking whether a route is normal. In Fig. 7, there are six rooms 62 through 67 in a building 61. Reader/writers 20 are installed at positions A, D, H, C, F, and J near the entrance/exit of these rooms. In the corridor of the building 61, reader/writers 20 are installed at positions B, E, I, and K, respectively. Reader/writers 20 are also installed at positions L and P of the entrances/exits of the building 61. Further, reader/writers 20 are installed at respective positions O, N, M, S, R, and Q outside the windows of the rooms 62 through 67 within the premises.

In the example shown in Fig. 7, route segments indicated by solid-line arrows are registered in advance in the information storage unit 32 as normal route segments constituting normal routes. The monitor and control unit 31 checks whether a route along which the IC tag 10 is moved corresponds to a route that is comprised of the registered normal route segments. If the travel route is comprised of the normal route segments, it is determined that the travel route is normal. If a segment other than the normal route segments is included, it is determined that the travel route is abnormal.

A route D→E→I→K→L→M→N, for example, is comprised of a route segment having the position D and the position E at its opposite ends, a route segment having the position E and the position I at its opposite ends, a route segment having the position I and the position K at its opposite ends, a route segment having the position K and the position L at its opposite ends, a route segment having the position L and the position M at its opposite ends, and a route segment having the position M and the position N at its opposite ends. All these route segments are registered normal route segments. Accordingly, a decision is made that the route D→E→I→K→L→M→N is a normal route.

Instead of detecting an abnormal state upon finding the inclusion of a segment other than the normal segments, an abnormal state may be detected, with abnormal route segments registered in advance, upon the finding of inclusion of an abnormal route segment in the travel route. In the example shown in Fig. 7, for example, route segments indicated by dotted-line arrows are registered in advance in the information storage unit 32 as abnormal route segments constituting abnormal routes.

The monitor and control unit 31 checks whether a route along which the IC tag 10 is moved includes any registered abnormal route segment. If the travel route includes an abnormal route segment, it is determined that the travel route is abnormal. If no abnormal route segment is included, on the other hand, it is determined that the travel route is normal. In the example shown in Fig. 7, the route segments indicated by dotted-line arrows correspond to the routes through which an item is moved through a window. It is understood that such movement does not happen under normal circumstances.

Alternatively, provision may be made such that both normal route segments and abnormal route segments are registered in advance. If the travel route is comprised only of normal route segments, it is determined that the travel route is normal. If the travel route includes an abnormal segment, on the other hand, it is determined that the travel route is abnormal. In such a case, provision may be made such that a low-urgency-level alarm is activated if the travel route includes a route segment other than the normal route segments, but does not include any abnormal route segment.

If the travel route includes an abnormal route segment H→M, a high-urgency-level alarm is activated because the item is moved through a window. If the travel route is H→K→M, some sort of abnormality is believed to has happened because the item is moved without being detected at the positions I and L. It is possible that the IC tag 10 is malfunctioning, or that the reader/writer 20 at the positions I and L are defective. In this case, therefore, a light-urgency-level alarm may be activated.

It should be noted that the position of detection of the IC tag 10 may be incorporated in the decision making process for determining whether the route is normal. As previously described, each item is associated with a corresponding movement level (i.e., movement control conditions or movement allowable area), so that items are classified into those which are not allowed to be moved, those which are allowed to be moved only within a building, those which are allowed to be moved within premises, those which are allowed to be move out of the premises, etc. If an item that is allowed to be moved only within the building is detected by a reader/writer 20 situated outside the building, alarm is activated regardless of the travel route based on the determination that the detected position is abnormal.

Referring to Fig. 6 again, the procedure returns to step S5 if the check made in step S10 finds that the travel route is normal, followed by performing the subsequent steps. If the check made in step S10 finds that the travel route is not normal, a determination is made in step S13 that theft or malfunction may have occurred, followed by activating alarm in step S14. With this, the procedure comes to an end.

The item management system according to the present invention can manage inventory in addition to managing the movement of items as described above. In the following, the goods/item management system according to the present invention for use in inventory management will be described.

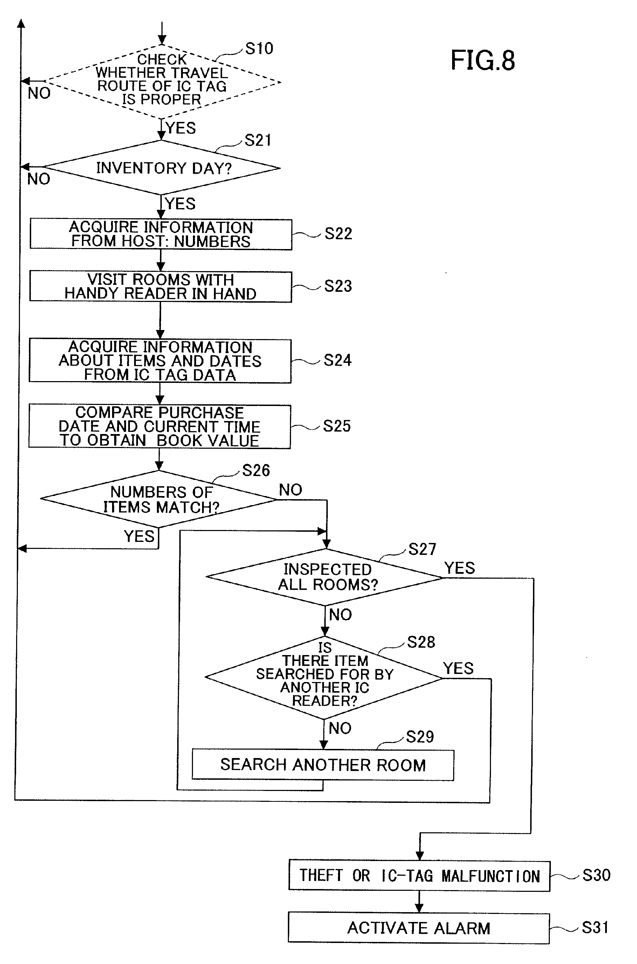

Fig. 8 is a flowchart showing the inventory management operation performed by the goods/item management system according to the present invention. The flowchart shown in Fig. 8 may be performed after step S10 of the flowchart shown in Fig. 6, for example. When the inventory management is to be performed, the information input unit 33 of the host computer 30 is used in advance to enter a item name, an initial storage address, a purchase year and date, a purchase price, an indication of a managing entity, and data indicative of a book value as the IC tag list 40. Such data may be transferred to the memory 15 of the IC tag 10 for storage therein.

In step S21, a check is made as to whether today is an inventory day Specifically, the monitor and control unit 31 of the host computer 30 checks whether the current date indicated by the date information matches a date that is specified as an inventory day in advance. If it is not an inventory day, the procedure returns to step S5 of Fig. 6, for example, to continue the operation of the item/goods management system as previously described. If today is an inventory day, the procedure goes to step S22.

In step S22, the host computer 30 transfers an item list for each room to a reader/writer 20. The reader/writer 20 may be a portable device (i.e., handy IC reader) that is configured to communicate through radio with the host computer 30, for example. Specifically, in the example shown in Fig. 4, the item list for the room B includes the item to which the IC tag 10-1 is attached, the item list for the room D including the item to which the IC tag 10-2 is attached, the item list for the room F including the item to which the IC tag 10-3 is attached, and the item list for the room K including the item to which the IC tag 10-4 is attached. Such room-specific item list is displayed on the display unit of the reader/writer 20 (handy IC reader), so that the user can learn which room requires inspection. Apart from the example shown in Fig. 4, a larger number of items may be placed in each room.

In step S23, the user visits each room to be inspected with the reader/writer 20 (handy IC reader) in his/her hand. Through this visiting, the reader/writer 20 reads IC tags 10 with respect to all the items (to which these IC tags 10 are attached) to be managed, which are placed in the rooms successively inspected.

In step S24, item information, date, and so on are retrieved from the IC tags 10. Specifically, the reader/writer 20 receives necessary information from the memory 15 of the IC tags 10, and stores this information in the memory 25. The control unit 24 of the reader/writer 20 reads the information from the memory 25 for transmission to the host computer 30. The monitor and control unit 31 of the host computer 30 stores the received information in the information storage unit 32.

In step S25, the host computer 30 calculates book values. Specifically, the monitor and control unit 31 of the host computer 30 calculates book values through depreciation based on the purchase dates, the current date, and the purchase prices. Based on the calculated book values, relevant data in the IC tag list 40 stored in the information storage unit 32 may be updated, and, also, the corresponding data in the memory 15 of the IC tags 10 may be updated.

In step S26, a check is made as to whether the numbers of items detected by visiting each room to be inspected match the numbers of items listed in the management data. Upon finding a match, the inventory management comes to an end, followed by continuing the previously-described operation of the item/goods management system. Upon finding mismatch, the procedure goes to step S27.

In step Ss7, a check is made as to whether all the rooms including rooms other than the rooms to be inspected are inspected. If all the rooms have already been inspected, a determination is made in step S30 that item theft or IC-tag malfunction has occurred, followed by activating alarm in step S31.

If there is still a room that has not been inspected, a check is made in step S28 as to whether another reader/writer 20 (handy IC reader) has found a missing item (i.e., the item that has not been found). The number of handy IC readers is not limited to one. In some cases, another person may be inspecting another room. Upon finding the missing item(s), the inventory management comes to an end, followed by continuing the previously-described operation of the item/goods management system.

If such another reader/writer 20 has not found a missing item, another room will be inspected. Namely, a room that has not yet been inspected is inspected by use of the reader/writer (handy IC reader) 20. Thereafter, the procedure returns to step S27, from which the subsequent steps are repeated.

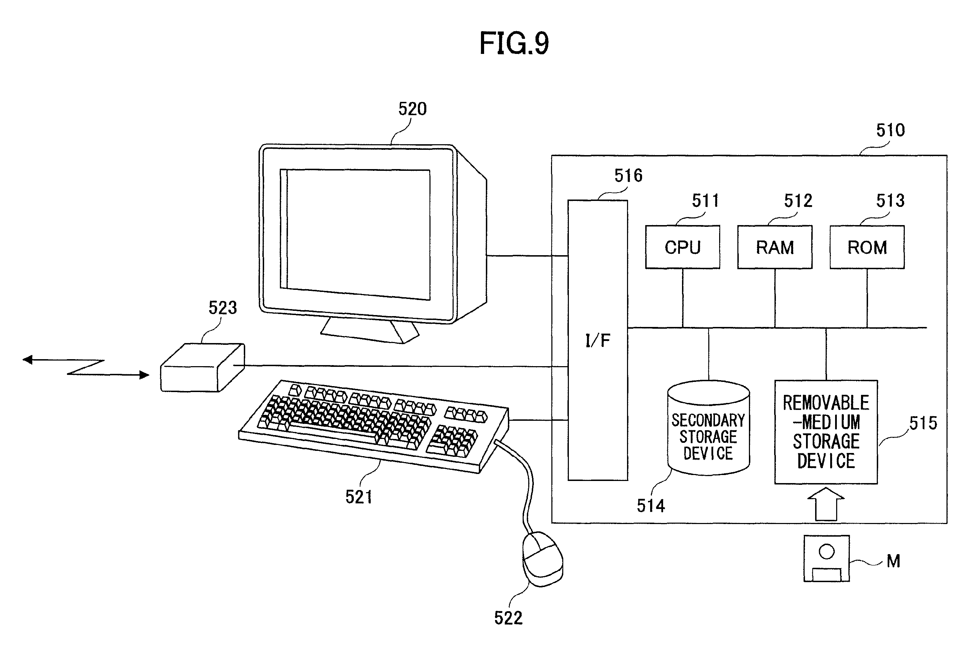

Fig. 9 is a drawing showing an example of the hardware configuration of the host computer 30. The item/goods management method according to the present invention is carried out by the host computer 30 having such hardware configuration.

As shown in Fig. 9, the host computer 30 for performing a goods/item management method according to the present invention includes a computer 510, a display apparatus 520 connected to the computer 510, a communication apparatus 523, and an input apparatus. The input apparatus includes a keyboard 521 and a mouse 522. The computer 510 includes a CPU 511, a ROM 513, a secondary storage device 514 such as a hard disk, a removable-medium storage device 515, and an interface 516. The secondary storage device 514 may corresponds to the information storage unit 32, and the keyboard 521 and mouse 522 may correspond to the information input unit 33. The interface 516 may correspond to the information transmission unit 34. The functions of the monitor and control unit 31 are implemented mainly by the CPU 511.

The keyboard 521 and mouse 522 provide user interface, and receive various commands for operating the computer 510 and user responses responding to data requests or the like. The display apparatus 520 displays the results of processing by the computer 510, and further displays various data that makes it possible for the user to communicate with the computer 510. The communication apparatus 523 provides for communication to be conduced with a remote site, and may include a modem, a network interface, or the like.

The goods/item management method according to the present invention is provided as a computer program executable by the computer 510. This computer program is stored in a memory medium M that is mountable to the removable-medium storage device 515. The computer program is loaded to the RAM 512 or to the secondary storage device 514 from the memory medium M through the removable-medium storage device 515. Alternatively, the computer program may be stored in a remote memory medium (not shown), and is loaded to the RAM 512 or to the secondary storage device 514 from the remote memory medium through the communication apparatus 523 and the interface 516.

Upon user instruction for program execution entered through the keyboard 521 and/or the mouse 522, the CPU 511 loads the program to the RAM 512 from the memory medium M, the remote memory medium, or the secondary storage device 514. The CPU 511 executes the program loaded to the RAM 512 by use of an available memory space of the RAM 512 as a work area, and continues processing while communicating with the user as such a need arises. The ROM 513 stores therein control programs for the purpose of controlling basic operations of the computer 510.

By executing the computer program as described above, the computer performs each goods/item management operation as described in the embodiments of the goods/item management system. Namely, the goods/item management method according to the present invention is performed.

Further, the present invention is not limited to these embodiments, but various variations and modifications may be made without departing from the scope of the present invention.

For example, in the above description of the embodiments, information (e.g., position information) stored in the memory 15 of the IC tag 10 is rewritten for update as needed. Alternatively, an IC tag 10 that does not allow rewriting may be used. As a general rule, it suffices if the IC tag 10 is configured to store identification information (e.g., tag number) to be discernible from another IC tag 10. Data such as position information, an item name, a purchase date, a movement level, and so on may only be recorded in and managed by the IC tag list 40 stored in the host computer 30.

## Claims

1. An item management system, comprising:
an IC tag;
a plurality of IC readers operable to electronically detect the IC tag; and
a monitor and control unit configured to detect successive positions of the IC tag by use of the plurality of IC readers in response to movement of the IC tag, to make a determination as to whether a travel route indicated by the detected successive positions is a normal route, and to activate alarm when the determination indicates an abnormal route.

2. The item management system as claimed in claim 1, further comprising an information storage unit configured to register in advance at least one of a normal route and an abnormal route with respect to movement between a plurality of positions corresponding to the plurality of IC readers, wherein the monitor and control unit determines whether the travel route indicated by the detected successive positions is a normal route based on said at least one of a normal route and an abnormal route registered in the information storage unit.

3. The item management system as claimed in claim 1, further comprising an information storage unit configured to store movement level information indicative of a movement allowed area that is selected for assignment to the IC tag from a plurality of movement allowed areas, wherein the monitor and control unit refers to the movement level information stored in the information storage unit, and activates alarm upon detecting that the detected successive positions fall outside the selected movement allowed area indicated by the movement level information.

4. An item management method, comprising the steps of:
detecting successive positions of an IC tag by a plurality of IC readers in response to movement of the IC tag;
making a determination as to whether a travel route indicated by the detected successive positions is a normal route; and
activating alarm when the determination indicates an abnormal route.

5. The item management method as claimed in claim 4, further comprising a step of registering in advance at least one of a normal route and an abnormal route with respect to movement between a plurality of positions corresponding to the plurality of IC readers, wherein the step of making a determination as to whether a travel route indicated by the detected successive positions is a normal route determines whether the travel route indicated by the detected successive positions is a normal route based on said at least one of a normal route and an abnormal route that are registered.

6. A monitor system for monitoring a travel route of an IC tag, comprising a monitor unit to monitor a normality of the travel route of the IC tag based on information regarding IC tag detection by IC readers situated at respective positions for detecting the IC tag and information about placement positions of the IC readers detecting the IC tag.

7. A monitor system, comprising:
IC readers situated at respective positions to detect an IC tag; and
a monitor unit to monitor a normality of the travel route of the IC tag based on information regarding IC tag detection by the IC readers and information about placement position of the IC tag.

8. A monitor system, comprising:
an IC tag;
IC readers situated at respective positions to detect an IC tag; and
a monitor unit to monitor a normality of the travel route of the IC tag based on information regarding IC tag detection by the IC readers and information about placement position of the IC tag.
